# EUROPÄISCHE PATENTSCHRIFT

(11) **EP 1 561 064 B1**
(45) Veröffentlichungstag und Bekanntmachung des Hinweises auf die Patenterteilung: **26.03.2008**
(21) Anmeldenummer: 03775222.7
(22) Anmeldetag: 23.10.2003
(51) Int. Cl.: F16L 37/098

(54) **VERBINDUNGSELEMENT**
JOINING ELEMENT
ELEMENT DE CONNEXION

(30) Priorität: 30.10.2002 DE 10250421
(43) Veröffentlichungstag der Anmeldung: 10.08.2005
(73) Patentinhaber: A. RAYMOND ET CIE, 38000 Grenoble (FR)
(72) Erfinder: MORETTI, Erminio, F-38000 Grenoble (FR); CHARRAS, Florent, F- 38120 Proveysieux (FR)
(74) Vertreter: Rüttgers, Joachim
(86) Internationale Anmeldenummer: PCT/EP2003/011744
(87) Internationale Veröffentlichungsnummer: WO 2004/040185

(56) Entgegenhaltungen:
- EP-A- 0 275 749
- WO-A-98/00663
- DE-A- 4 118 463
- US-A- 4 969 879
- US-A1- 2002 135 182

## Beschreibung

Die Erfindung betrifft ein Verbindungselement gemäß dem Oberbegriff des Patentanspruches 1.

Ein derartiges Verbindungselement ist aus US 2002/0135182 A1 bekannt. Bei dem vorbekannten Verbindungselement sind an freien Enden von in Einsteckrichtung eines Gegenstückes nach vorne weisenden Armen von zweiarmigen Schnappelementen nach innen gerichtete Haken angeformt, mit denen ein Rastelement des Gegenstückes hintergreifbar ist. Zum Lösen des Hintergriffs sind in Einsteckrichtung des Gegenstückes nach hinten weisende und nach außen aufgebogene Arme aufeinander zu bewegbar, bis sich die Haken von dem Rastelement lösen.

Aus DE 41 18 463 A1 ist ein weiteres derartiges Verbindungselement bekannt, bei dem sich im wesentlichen parallel zur Außenwand des rohrförmigen Grundkörpers erstreckende Schnappelemente in ihrem Wiegepunkt durch einen geschwungenen, elastisch verbiegbaren Steg mit dieser Außenwand verbunden sind. Am freien Ende des vorderen Armes jedes Schnappelements ist der erwähnte, nach innen gerichtete Haken ausgebildet, der jeweils zweite Arm erstreckt sich in radialem Abstand zum Grundkörper geradlinig nach hinten. Um eine Verbindung herzustellen, wird das Verbindungselement mit dem vorderen Ende seines Grundkörpers in den rohrförmigen Anschlussteil eines Gegenstücks eingeschoben, wo es in bekannter Weise dichtend zur Anlage kommt. Dabei schnappen die Haken an den vorderen Enden der Schnappelemente hinter eine in der Außenwand des Gegenstücks ausgebildete Hinterschneidung, wodurch die Verbindung gegen unbeabsichtigtes Lösen gesichert ist. Um die Verbindung zu lösen, wird ein radialer Druck auf die freien Enden der sich nach hinten erstreckenden, zweiten Arme der Schnappelemente ausgeübt, wodurch die Verbindungsstege zwischen den Schnappelementen und dem Grundkörper wie ein Gelenk wirken und die Haken aus ihrem Eingriff gelöst werden, so dass das Verbindungselement aus dem Gegenstück herausgezogen werden kann.

Als nachteilig bei den vorbekannten Verbindungselementen hat sich erwiesen, dass es an den Verbindungsstegen und an den sich nach hinten erstreckenden Armen der Schnappelemente zu bleibenden Verformungen und sogar zum Bruch kommen kann, wenn letztere überweit in Richtung auf den Grundkörper zusammengedrückt werden, um die Verbindung zu lösen. Die Rückstellfunktion für die Schnappelemente in ihre Grundstellung wird allein durch die Verbindungsstege ausgeübt und ist nicht zuverlässig. Auch hat sich gezeigt, dass, wenn, z.B. betriebsbedingt, Druck auf das Verbindungselement ausgeübt oder auch mit entsprechender Kraft daran gerissen wird, die Haken sich unbeabsichtigt aus dem Eingriff am Gegenstück lösen können.

Aufgabe der Erfindung ist es, ein Verbindungselement der eingangs genannten Art zu schaffen, bei dem nach einem Lösevorgang an der Verbindung eine sichere Rückstellung der Schnappelemente in ihre Grundstellung gewährleistet ist und eine bleibende Verformung oder gar ein Bruch an diesen Schnappelementen infolge ihrer bestimmungsgemäßen Handhabung sicher vermieden wird. Außerdem soll mehr Sicherheit gegen unbeabsichtigtes Lösen der Verbindung erreicht werden.

Dies wird einem Verbindungselement der eingangs genannten Art erfindungsgemäß mit den kennzeichnenden Merkmalen des Patentanspruches 1 gelöst. Indem so die mögliche Bewegung der Schnappelemente auf das funktioneil notwendige beschränkt wird, wird einer bleibenden Verformung der Schnappelemente entgegengewirkt. Die gebogenen Enden der Federarme verleihen den Schnappelementen eine wirksame Rückstellkraft.

Nach einer Ausführungsform der Erfindung sind die Federarme an ihren Endabschnitten zunächst konkav leicht nach außen und dann einmal in Richtung auf den Grundkörper zurückgebogen. Zwischen dem freien Ende der Federarme und dem Grundkörper besteht der die Wiegebewegung begrenzende Spalt.

Nach einer weiteren, bevorzugten Ausführungsform der Erfindung sind die Federarme an ihrem jeweiligen Endabschnitt zweifach einwärts zurückgebogen, so dass eine offene Öse gebildet ist mit besagtem Spalt zwischen dem freien Ende der offenen Öse und der Innenfläche des jeweiligen Federarms und mit einer einen weiteren Spalt zur Außenwand des Grundkörpers einhaltenden Rundung, wobei bei einer Wiegebewegung der Federarme in Richtung auf den Grundkörper zunächst der Spalt zwischen der Außenwand des Grundkörpers und der Rundung und in einer zweiten Stufe der Spalt zwischen dem freien Ende der Öse und der Innenfläche des Federarmes geschlossen wird. Durch die Ausbildung der federnd verformbaren Öse am Ende der Federarme wird die Rückstellkraft für die Schnappelemente noch erhöht, so dass sichergestellt ist, dass die Schnappelemente nach jeder Betätigung in ihre Ausgangsstellung zurückkehren.

Nach einer Ausführungsform der Erfindung sind am Grundkörper diametral einander gegenüberliegend in Richtung der Mittelachse verlaufende, ebene Auflageflächen für die Enden der Federarme ausgebildet.

Nach der bevorzugten Ausführungsform sind am Grundkörper diametral einander gegenüberliegend in Richtung der Mittelachse verlaufende, ebene Auflageflächen für die dem Grundkörper zugewandte Rundung der jeweiligen Öse und den ebenfalls auf den Grundkörper zu gerichteten Ösenabschnitt sowie senkrecht zu diesen Auflageflächen stehende Anschlagflächen für den auf die Innenfläche der Federarme gerichteten Endabschnitt der jeweiligen Öse ausgebildet. Durch den Anschlag der auf die Innenfläche der Federarme zu gerichteten Endabschnitte der Ösen an den senkrecht zur Mittelachse stehenden Anschlägflächen wird verhindert, dass sich die Haken der Schnappelemente, z.B. unter Druck, unbeabsichtigt aus dem Eingriff am Gegenstück lösen können.

Die Erfindung wird im folgenden anhand der anhängenden Zeichnung beispielhaft näher beschrieben; es zeigen
- Fig. 1: eine perspektivische Darstellung einer ersten, bevorzugten Ausführungsform eines erfindungsgemäßen Verbindungselements,
- Fig. 2: eine Seitenansicht des Verbindungselements nach Fig. 1 und seines Gegenstücks in noch gelöstem Zustand,
- Fig. 3: die Seitenansicht gemäß Fig. hergestellter Verbindung zwischen Verbindungselement und Gegenstück,
- Fig. 4: die Seitenansicht gemäß Fig. 3, wenn, z.B. betriebsbedingt, Druck auf die hergestellte Verbindung ausgeübt wird,
- Fig. 5: die Seitenansicht gemäß Fig. 3 in Lösestellung des Verbindungselements und
- Fig. 6: die Seitenansicht einer zweiten Ausführungsform eines erfindungsgemäßen Verbindungselements.

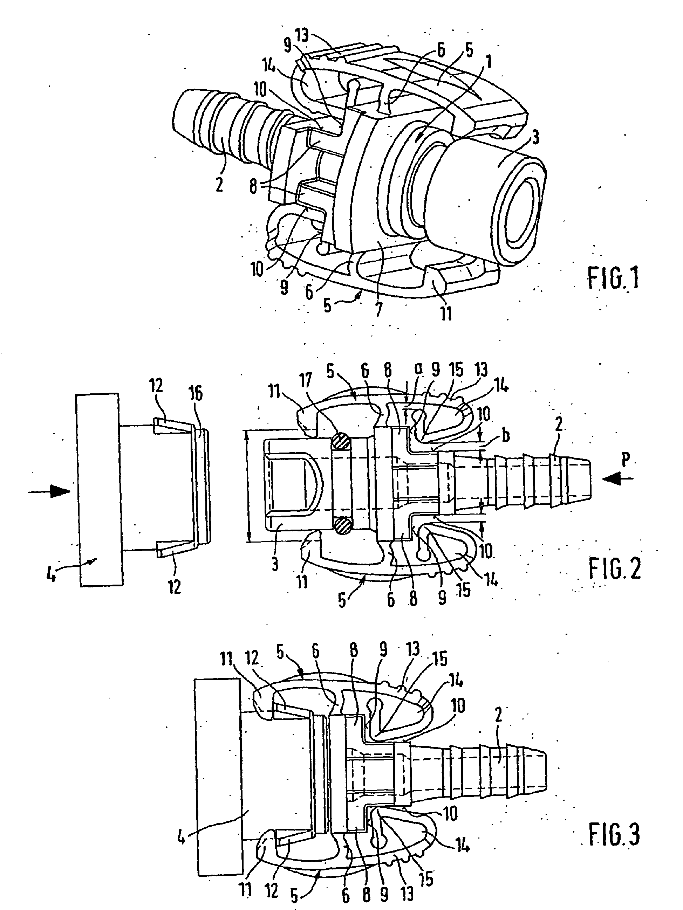

Fig. 1 zeigt ein Verbindungselement mit einem rohrförmigen Grundkörper **1,** der an seinem einen, hinteren Ende in einen Anschlussstutzen **2** für eine Druckmittelleitung, z.B. einen Schlauch, übergeht und an seinem vorderen Ende einen zylindrischen Abschnitt **3** aufweist, mit dem das Verbindungselement zur Herstellung einer Verbindung in ein entsprechend geformtes Gegenstück **4** (siehe Fig. 2 und Fig. 4 bis 6) geschoben werden kann und dort in bekannter Weise dichtend zur Anlage kommt. Seitlich am Grundkörper **1** sind diametral einander gegenüberliegend die Schnappelemente **5** angeordnet. Sie sind in der Art eines zweiarmigen Hebels ausgebildet und in ihrem Wiegepunkt durch einen radial abstehenden Verbindungssteg **6** mit dem Grundkörper **1** verbunden. Vorzugsweise ragt der Verbindungssteg **6** von einer an dem Grundkörper **1** überstehenden Anschlagplatte **7** ab, die bei der Montage am Gegenstück **4** zum Anschlag kommen kann (siehe Fig. 3). An die Anschlagplatte **7** schließen sich in Richtung auf den Anschlussstutzen **2** zwei einander diametral gegenüberliegende, rechtwinklige Formteile **8** an, deren einer senkrecht zur Achsrichtung verlaufender Winkelarm eine ebene Anschlagfläche **9** bietet und deren in Achsrichtung verlaufender Winkelarm eine ebene Auflagefläche **10** bietet (siehe unten). Die Anschlagplatte **7** und die Formteile **8** sind vorzugsweise einstückig mit dem Grundkörper **1** ausgebildet. Am freien Ende des einen, in Richtung auf das Gegenstück **4** weisenden Hebelarms beider Schnappelemente **5** ist ein nach innen gerichteter Haken **11** angeformt. Diese Haken **11** gleiten beim Einschieben des Verbindungselementes in das Gegenstück **4** auf dessen Umfangsfläche entlang und greifen schießlich hinter eine Hinterschneidung oder ein Rastelement **12** am Umfang des Gegenstücks **4** (siehe Fig. 3). Der nach hinten gerichtete Hebelarm beider Schnappelemente **5** ist als Federarm **13** ausgebildet. Dazu ist sein Ende zweifach nach innen zurückgebogen und bildet gewissermaßen eine offene, elastisch verformbare Öse **14,** zwischen dessen freiem Ende und der Innenfläche des Federarms **13** in Normalposition ein Spalt **a** besteht. Zwischen der nach innen weisenden Rundung **15** der Öse **14** und der waagrechten Auflagefläche **10** des Formteils **(8)** besteht in Ausgangsposition ein weiterer Spalt **b.**

Wenn das Verbindungselement gemäß Fig. 2 in Pfeilrichtung **P** in das Gegenstück **4** geschoben wird, nimmt die Anordnung schließlich die Stellung gemäß Fig. 3 ein Die Haken **11** der Schnappelemente **5** greifen hinter das Rastelement **12** am Außenumfang des Gegenstücks **4** und die Anschlagplatte **7** liegt mit ihrer Stirnfläche an der Stirnfläche des Gegenstückes **4** bzw. einem dort vorgesehenen Dichtmittel **16** an, und ein in einer Nut des zylindrischen Abschnitts **3** angeordneter Dichtring **17** liegt dichtend an der Innenwand des Gegenstückes **4** die Verbindung ist hergestellt. Bei diesem Vorgang wurden die auf das Gegenstück **4** weisenden Arme der Schnappelemente **5** leicht aufgespreizt, und beim Hintergreifen der Haken **11** hinter das oder die Rastelemente **12** kehren sie nicht vollkommen in ihre Ausgangslage zurück, die Haken **11** stehen so unter einer leichten Vorspannung, so dass einem unbeabsichtigten Abziehen des Verbindungselements entgegengewirkt wird. Außerdem haben sich die Federarme **13** bei der Wiegebewegung der Schnappelemente **5** um den als Scharnier wirkenden Verbindungssteg **6** in entgegengesetzter Richtung bewegt, so dass die innere Rundung **15** der Öse **14** jetzt auf der Auflagefläche **10** des Formteils **8** mit einiger Spannung aufliegt, so dass eine Rückstellkraft wirksam wird und die Spannung mit der die Haken **11** gegen die Umfangsfläche des Gegenstücks **4** gepresst werden, erhöht und die Verbindung sicherer wird.

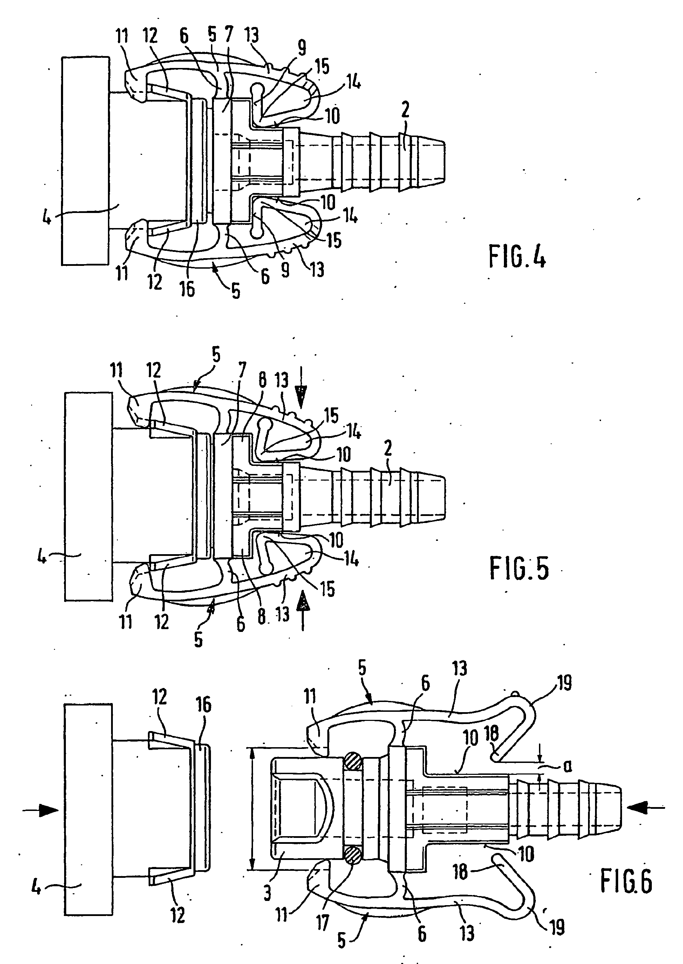

Zwischen dem auf die Innenfläche der Federarme **13** gerichteten Endabschnitt der Ösen **14** und den senkrecht zur Mittelachse verlaufenden Anschlagflächen **9** der Formteile **8** besteht ein kleiner Spalt (siehe Fig. 3). Gerät die Anordnung in diesem Zustand unter Druckeinwirkung, so wird dieser Spalt geschlossen, indem sich der Endabschnitt der Ösen **14** eng an die Anschlagfläche **9** legt, wodurch verhindert wird, dass sich die Haken **11** unter Druck aus ihrem Eingriff lockern und entriegeln können (siehe Fig. 4).

Soll die Verbindung gelöst werden, so werden die Schnappelemente **5** an ihren Federarmen **13** in Pfeilrichtung (siehe Fig. 5) zusammengepresst. Dabei legen sich die Ösen **14** mit ihrem dem Grundkörper **1** zugewandten Abschnitt eng an die Auflagerfläche **10** und schiebt sich gleichzeitig in Richtung auf die Anschlagfläche **9** bis der auf den Federarm **13** zurückweisende Abschnitt eng an der Anschlagfläche **9** anliegt. Bei weiterem Zusammenpressen der Federarme **13** werden diese leicht verformt bis das auf die Innenseite der Federarme **13** weisende, freie Ende der Ösen **14** an dieser Innenseite anstoßen und so ein noch weiteres Zusammenpressen der Federarme **13** und eine daraus möglicherweise fölgende bleibende Verformung verhindert wird. Der Abstand des freien Endes der Ösen **14** zur Innenseite der Federarme **13** ist so gewählt, dass dabei die vorderen, auf das Gegenstück **4** weisenden Arme der Schnappelemente **5** soweit aufgespreizt werden, dass sich die Haken **11** aus ihrem Eingriff an den Rastelementen **12** lösen. Danach kann das Verbindungselement von dem Gegenstück **4** abgezogen, die Verbindung also gelöst werden. Die Schnappelemente **5** kehren danach durch die Rückstellkraft der Federarme **13** bzw. der an ihnen ausgebildeten Ösen **14** in ihre Ausgangsstellung gemäß Fig. 2 zurück.

Fig. 6 zeigt eine zweite Ausführungsform des erfindungsgemäßen Verbindungselements. Gleiche Teile sind mit gleichen Bezugszahlen gekennzeichnet. Im Unterschied zur oben beschriebenen Ausführungsform sind hier die nach hinten gerichteten Federarme **13** der Schnappelemente **5** zunächst leicht nach außen und ihre Enden dann nur einfach in Richtung auf den Grundkörper **1** zurückgebogen.

Zwischen dem freien Ende **18** dieses hakenförmigen Endabschnitts **19** und der Auflagefläche **10** des Formteils **8** besteht der Spalt **a,** der die Bewegung der Federarme **13** und damit der Schnappelemente **5** beim Lösevorgang zu begrenzt, um so eine bleibende Verformung der Schnappelemente **5** zu verhindern.

## Patentansprüche

1. Verbindungselement als Teil einer Schnell-Verbindungseinheit für hydraulische oder pneumatische Verbindungsleitungen mit einem rohrförmigen Grundkörper (1), an dem diametral einander gegenüberliegend und seitlich beabstandet zwei zweiarmige Schnappelemente (5) angeformt sind, die an ihrem Wiegepunkt durch einen elastischen Verbindungssteg (6) mit der Außenwand des Grundkörpers (1) verbunden sind und an den freien Enden ihrer nach vom weisenden Arme nach innen gerichtete Haken (11) aufweisen, mit denen ein Rastelement in Gestalt einer Hinterschneidung an der Außenwand eines Gegenstücks (4) der Schnell-Verbindungseinheit bei Herstellung der Verbindung hintergreifbar ist, wobei die nach hinten weisenden Arme der Schnappelemente (5) als Federarme (13) ausgebildet sind, zwischen deren freien Enden und einer jeweils gegenüberliegenden Anlagefläche ein Spalt (a) bestehen bleibt, **dadurch gekennzeichnet, dass** die freien Enden der nach hinten weisenden Arme einwärts zurückgebogen sind und dass der Spalt (a) so bemessen ist, dass die Wiegebewegung der Federarme (13) in Richtung auf den Grundkörper (1) auf das Maß begrenzt ist, das der für das Lösen des Eingriffs der Haken (11) am Rastelement (12) des Gegenstücks (4) notwendigen Spreizbewegung der die Haken (11) tragenden vorderen Arme der Schnappelemente (5) entspricht.

2. Verbindungselement nach Anspruch 1, **dadurch gekennzeichnet, dass** die Federarme (13) an ihrem Endabschnitt zunächst konkav leicht nach außen und dann einmal in Richtung auf den Grundkörper (1) zurückgebogen sind und zwischen dem freien Ende der Federarme (13) und dem Grundkörper (1) der die Wiegebewegung begrenzende Spalt (a) besteht.

3. Verbindungselement nach Anspruch 1, **dadurch gekennzeichnet, dass** die Federarme (13) an ihrem Endabschnitt zweifach einwärts zurückgebogen sind und so eine offene Öse (14) gebildet ist mit dem Spalt (a) zwischen dem freien Ende der offenen Öse (14) und der Innenfläche des jeweiligen Federarms (13) und mit einer einen Spalt (b) zur Außenwand des Grundkörpers (1) einhaltenden Rundung (15), wobei bei einer Wiegebewegung der Federarme (13) in Richtung auf den Grundkörper (1) zunächst der Spalt (b) zwischen der Außenwand des Grundkörpers **(1)** und der Rundung **(15)** und in einer zweiten Stufe der Spalt **(a)** zwischen dem freien Ende der Öse **(14)** und der Innenfläche des Federarmes **(13)** geschlossen wird.

4. Verbindungselement nach Anspruch 1, **dadurch gekennzeichnet, dass** am Grundkörper **(1)** diametral einander gegenüberliegend in Richtung der Mittelachse verlaufende, ebene Auflageflächen **(10)** für die Enden der Federarme **(13)** ausgebildet sind.

5. Verbindungselement nach Anspruch 3, **dadurch gekennzeichnet, dass** am Grundkörper **(1)** diametral einander gegenüberliegend in Richtung der Mittelachse verlaufende, ebene Auflageflächen **(10)** für die dem Grundkörper **(1)** zugewandte Rundung **(15)** der jeweiligen Öse **(14)** und den ebenfalls auf den Grundkörper **(1)** zu gerichteten Ösenabschnitt sowie senkrecht zu diesen Auflageflächen **(10)** stehende Anschlagflächen **(9)** für den auf die innenfläche der Federarme **(13)** gerichteten Endabschnitt der jeweiligen Öse **(14)** ausgebildet sind.

## Claims

1. Joining element as part of a quick joining unit for hydraulic or pneumatic connecting lines, comprising a tubular base body (1) on which two two-armed snap elements (5) which lie mutually diametrically opposed and laterally spaced are formed, said snap elements being connected at their pivot points by an elastic connecting web (6) to the outer wall of the base body (1) and having, at the free ends of their forwardly facing arms, inwardly directed hooks (11) which are able to engage behind a latching element in the form of an undercut in the outer wall of a mating part (4) of the quick joining unit when the join is made, wherein the rearwardly facing arms of the snap elements (5) are formed as spring arms (13) between each of whose free ends and a respective opposing contact surface, a gap (a) remains, **characterised in that** the free ends of the rearwardly facing arms are bent back inwardly and that the gap (a) is dimensioned such that the pivoting movement of the spring arms (13) in the direction towards the base body (1) is limited to the extent that corresponds to the spreading movement of the front arms of the snap elements (5) bearing the hooks (11) which is necessary for releasing the engagement of the hooks (11) with the latching element (12) of the mating part (4).

2. Joining element according to claim 1, **characterised in that**, at their end portion, the spring arms (13) are bent back initially concavely slightly outwardly and then in the direction of the base body (1) and that the gap (a) which limits the pivoting movement exists between the free ends of the spring arms (13) and the base body (1).

3. Joining element according to claim 1, **characterised in that** the spring arms (13) are bent back inwardly twice at their end section and thereby an open eye (14) is formed, with the gap (a) between the free end of the open eye (14) and the inner surface of the respective spring arm (13) and with a rounding (15) maintaining a gap (b) from the outer wall of the base body (1), wherein on a pivot movement of the spring arms (13) in the direction towards the base body (1), initially the gap (b) between the outer wall of the base body (1) and the rounding (15) and, in a second stage, the gap (a) between the free end of the eye (14) and the inner surface of the spring arm (13) is closed.

4. Joining element according to claim 1, **characterised in that** planar contact surfaces (10) which are mutually diametrically opposed and run in the direction of the central axis are formed on the base body (1) for the ends of the spring arms (13).

5. Joining element according to claim 3, **characterised in that** planar contact surfaces (10) which are mutually diametrically opposed and run in the direction of the central axis are formed on the base body (1) for the rounding (15) of each eye (14), said rounding facing towards the base body (1) and also for the eye portion facing towards the base body (1) and stop surfaces (9) are formed arranged perpendicularly to these contact surfaces (10), for the end section of the respective eye (14) directed towards the inner surface of the spring arms (13).

## Revendications

1. Elément de raccordement faisant partie intégrante d'un raccord rapide pour des conduites de raccordement hydrauliques ou pneumatique se composant d'un élément principal tubulaire (1) duquel sont réalisés solidaires par moulage deux éléments d'encliquetage à deux branches (5) diamétralement opposés et distants dans le plan latéral qui, au niveau de leur point de basculement, sont reliés par une barrette entretoise de liaison élastique (6) à la paroi extérieure de l'élément principal (1) et qui sont munis au niveau des extrémités libres de leurs branches orientées vers l'avant de crochets (11) orientés vers l'intérieur, au moyen desquels il est possible, lors de l'établissement de la liaison d'accouplement, de venir cramponner par derrière un élément de mise en prise d'encastrement, se présentant sous la forme d'une dépouille, prévu à cet effet dans la paroi extérieure de l'élément d'accouplement conjugué (4) du raccord rapide, les branches orientées vers l'arrière des éléments d'encliquetage (5) se présentant en l'occurrence sous la forme de branches élastiques (13), entre les extrémités libres desquelles et une surface d'appui respectivement opposée il existe un intervalle d'écartement (a), **caractérisé en ce que** les extrémités libres des branches orientées vers l'arrière sont repliées vers l'intérieur et **en ce que** l'intervalle d'écartement (a) est dimensionné dans une proportion telle que l'amplitude du mouvement de basculement accompli par les branches élastiques (13) dans la direction de l'élément principal (1) est limité à la valeur qui correspond à la proportion dans laquelle les branches antérieures portant les crochets (11) des éléments d'encliquetage (5) doivent s'écarter pour permettre aux crochets (11) de se libérer de leur emprise d'engagement avec l'organe d'encastrement (12) de l'élément d'accouplement conjugué (4).

2. Elément de raccordement selon la revendication 1, **caractérisé en ce que** les pattes élastiques (13) sont, au niveau de leur portion d'extrémité, tout d'abord légèrement repliées vers l'extérieur suivant un tracé concave puis repliées une fois en direction de l'élément principal et **en ce qu'**entre l'extrémité libre des branches élastiques (13) et l'élément principal (1) il existe un intervalle d'écartement (a) qui limite le mouvement de basculement.

3. Elément de raccordement selon la revendication 1, **caractérisé en ce que** les pattes élastiques (13) sont, au niveau de leur portion d'extrémité, repliées successivement deux fois vers l'intérieur ce qui fait qu'une boucle ouverte (14) est ainsi définie avec l'intervalle d'écartement (a) entre l'extrémité libre de la boucle ouverte (14) et la surface intérieure de la branche élastique (13) respective et avec une courbure (15) respectant un intervalle d'écartement (b) par rapport à la paroi extérieure de l'élément principal (1), ce qui fait que lorsque les branches élastiques (13) effectuent un mouvement de basculement dans la direction de l'élément principal (1), l'intervalle d'écartement (b) existant entre la paroi extérieure de l'élément principal (1) et la courbure (15) est tout d'abord comblé et dans un deuxième temps l'intervalle d'écartement (a) existant entre l'extrémité libre de la boucle (14) et la surface intérieure de la branche élastique (13) est résorbé.

4. Elément de raccordement selon la revendication 1, **caractérisé en ce que** l'élément principal (1) comporte des surfaces d'appui planes (10), respectivement diamétralement opposées, orientées dans la direction de l'axe médian, pour les extrémités des branches élastiques (13).

5. Elément de raccordement selon la revendication 3, **caractérisé en ce que** l'élément principal (1) comporte des surfaces d'appui planes (10), respectivement diamétralement opposées, orientées dans la direction de l'axe médian, pour la courbure (15) faisant face à l'élément principal (1) de la boucle respective (14) et la portion de boucle également orientée en direction de l'élément principal (1) ainsi que, disposées perpendiculairement par rapport à ces faces d'appui (10), des faces de butée (9) pour la portion d'extrémité, orientée vers la surface intérieure des branches élastiques (13), de la boucle respective (14).
